# EUROPÄISCHE PATENTSCHRIFT

(11) **EP 3 393 874 B1**
(45) Veröffentlichungstag und Bekanntmachung des Hinweises auf die Patenterteilung: **15.04.2020**
(21) Anmeldenummer: 16798525.8
(22) Anmeldetag: 22.11.2016
(51) Int. Cl.: B60W 10/184, B60W 10/11

(54) **VERFAHREN ZUM BETREIBEN EINES FAHRZEUGS MIT EINEM FAHRZEUGANTRIEBSSTRANG UND MIT EINER FAHRZEUGBREMSE**
METHOD FOR OPERATING A VEHICLE WITH A VEHICLE POWERTRAIN AND A VEHICLE BRAKE
PROCÉDÉ DE FONCTIONNEMENT D'UN VÉHICULE COMPRENANT UNE CHAÎNE CINÉMATIQUE DE VÉHICULE ET UN FREIN DE VÉHICULE

(30) Priorität: 22.12.2015 DE 102015226591
(43) Veröffentlichungstag der Anmeldung: 31.10.2018
(73) Patentinhaber: ZF Friedrichshafen AG, 88046 Friedrichshafen (DE)
(72) Erfinder: FEHR, Philipp, 88131 Lindau (DE); BROCKMANN, Johannes, 88131 Lindau (DE); SCHIELE, Peter, 88079 Kressbronn (DE)
(74) Vertreter: ZF Friedrichshafen AG
(86) Internationale Anmeldenummer: PCT/EP2016/078408
(87) Internationale Veröffentlichungsnummer: WO 2017/108302

(56) Entgegenhaltungen:
- DE-A1-102009 002 206
- DE-A1-102009 028 305
- DE-A1-102010 063 026
- DE-A1-102014 208 873
- US-A1- 2004 038 776
- US-A1- 2014 100 074

## Beschreibung

Die Erfindung betrifft ein Verfahren zum Betreiben eines Fahrzeuges mit einem Fahrzeugantriebsstrang und mit einer Fahrzeugbremse während einer Rückschaltung in einem Automatgetriebe im Schubbetrieb des Fahrzeuges gemäß der im Oberbegriff des Patentanspruches 1 näher definierten Art. DE102010063026 offenbart die Merkmale des Oberbegriffes des Anspruchs 1.

Aus der DE 10 2008 000 429 A1 ist ein Mehrstufengetriebe mit neun Vorwärtsgängen und einem Rückwärtsgang bekannt. Das Mehrstufengetriebe umfasst vier reibschlüssige und zwei formschlüssige Schaltelemente, um mehrere Zahnradpaarungen eines Radsatzes des Mehrstufengetriebes zur Darstellung der verschiedenen Gänge für Vorwärts- und Rückwärtsfahrt zu- und abschalten zu können.

Während definierter Schubrückschaltungen im Mehrstufengetriebe wird jeweils eines der reibschlüssigen Schaltelemente in seinen geöffneten Betriebszustand überführt und eines der formschlüssigen Schaltelemente zur Darstellung der angeforderten Zielübersetzung geschlossen. Dabei ist das zuzuschaltende formschlüssige Schaltelement in einen für die Zuschaltung erforderlichen Betriebszustand zu überführen, in dem eine Differenzdrehzahl zwischen Schaltelementhälften des zuzuschaltenden formschlüssigen Schaltelementes innerhalb eines Differenzdrehzahlfensters um die Differenzdrehzahl gleich null liegt. Zusätzlich wird das zuzuschaltende formschlüssige Schaltelement in einen wenigstens annähernd lastfreien Betriebszustand überführt.

Um Fahrzeuge mit möglichst hohem Wirkungsgrad betreiben zu können, werden Fahrzeuge in zunehmendem Umfang mit sogenannten Hybridfahrzeugantriebssträngen ausgeführt, die neben Brennkraftmaschinen zusätzlich elektrische Maschinen aufweisen, in deren Bereich während eines Schubbetriebes die Bewegungsenergie des Fahrzeuges in elektrische Energie umwandelbar ist.

Ergeht jedoch während eines aktivierten Rekuperationsbetriebes einer solchen elektrischen Maschine eine Anforderung für eine vorstehend näher erläuterte Schubrückschaltung sind die herkömmlichen Vorgehensweisen, während welchen ein zuzuschaltendes formschlüssiges Schaltelement durch einen positiven Motoreingriff und ein damit einhergehendes definiertes Führen einer Drehzahl einer mit lediglich einer Brennkraftmaschine ausgeführten Antriebsmaschineneinrichtung synchronisiert wird, nur bedingt geeignet, Schubrückschaltungen mit einem gewünscht hohen Fahrkomfort innerhalb definierter Betriebszeiten und mit einem von einem Fahrer erwarteten Fahrzeugverhalten durchzuführen.

Der vorliegenden Erfindung liegt daher die Aufgabe zugrunde, ein Verfahren zum Betreiben eines Fahrzeuges mit einem beliebig konfigurierten Fahrzeugantriebsstrang, insbesondere mit einem Hybridfahrzeugantriebsstrang, und mit einer Fahrzeugbremse während einer Rückschaltung in einem Automatgetriebe im Schubbetrieb des Fahrzeuges zur Verfügung zu stellen, mittels welchem Schubrückschaltungen innerhalb definierter Betriebszeiten mit hohem Fahrkomfort sowie mit einem erwartbaren Fahrverhalten umsetzbar sind.

Erfindungsgemäß wird diese Aufgabe mit einem Verfahren mit den Merkmalen des Patentanspruches 1 gelöst.

Bei dem erfindungsgemäßen Verfahren zum Betreiben eines Fahrzeuges mit einem Fahrzeugantriebsstrang und mit einer Fahrzeugbremse während einer Rückschaltung in einem Automatgetriebe im Schubbetrieb des Fahrzeuges, während der zumindest ein reibschlüssiges Schaltelement zu öffnen und ein formschlüssiges Schaltelement zu schließen ist, wird zum Zeitpunkt einer Anforderung der Schubrückschaltung im Bereich einer Antriebsmaschineneinrichtung ein an einem Abtrieb anliegendes Abtriebsdrehmoment zumindest teilweise abgestützt.

Erfindungsgemäß wird die Antriebsmaschineneinrichtung vor der Durchführung der Schubrückschaltung zur Reduzierung des im Bereich der Antriebsmaschineneinrichtung abstützbaren Teils des Abtriebsdrehmomentes betätigt und ein Teil des Abtriebsdrehmomentes im Bereich der Fahrzeugbremse durch entsprechende Betätigung der Fahrzeugbremse abgestützt.

Mittels des erfindungsgemäßen Verfahrens ist ein zuzuschaltendes formschlüssiges Schaltelement auf einfache Art und Weise in einen für die Zuschaltung bzw. das Schließen des formschlüssigen Schaltelementes erforderlichen Betriebszustand unabhängig von der Konfiguration des Fahrzeugantriebsstranges überführbar, ohne ein zum Zeitpunkt der Anforderung für die Schubrückschaltung, während der das formschlüssige Schaltelement zu schließen ist, vorliegendes Fahrverhalten eines Fahrzeuges während der Schubrückschaltung wesentlich zu verändern bzw. dieses in einem für einen Fahrer nicht erwartbaren Umfang zu beeinträchtigen.

Durch die erfindungsgemäße Vorgehensweise, während der ein zunächst im Bereich der Antriebsmaschineneinrichtung abgestützter Teil eines im Bereich des Abtriebs anliegenden Abtriebsdrehmomentes mit geringem Aufwand durch Betätigen der Fahrzeugbremse abgestützt wird, ist das zuzuschaltende formschlüssige Schaltelement durch einen geeigneten Motoreingriff in den für die Zuschaltung erforderlichen Betriebszustand überführbar, ohne ein Fahrverhalten eines Fahrzeuges wesentlich zu beeinflussen.

Wird das reibschlüssige Schaltelement ab dem Zeitpunkt, ab dem der Teil des im Bereich der Antriebsmaschineneinrichtung abstützbaren Abtriebsdrehmomentes im Wesentlichen gleich null ist, in einen Betriebszustand überführt, in dem die Übertragungsfähigkeit des reibschlüssigen Schaltelementes gleich null ist und ein Anheben der Betätigungskraft einen sofortigen Anstieg der Übertragungsfähigkeit des reibschlüssigen Schaltelementes bewirkt, wird das während der Schubrückschaltung zuzuschaltende formschlüssige Schaltelement in einen lastfreien Betriebszustand überführt und zusätzlich durch Variieren des im Bereich der Antriebsmaschineneinrichtung zur Verfügung stehenden Drehmomentes sowie durch zusätzliches spontanes Anheben der Übertragungsfähigkeit des reibschlüssigen Schaltelementes mit geringem Aufwand innerhalb kurzer Betriebszeiten in den für die Zuschaltung erforderlichen Betriebszustand überführt

Das Automatgetriebe ist während einer Schubrückschaltung mit hoher Spontanität betreibbar, wenn das von der Antriebsmaschineneinrichtung zur Verfügung stehende Drehmoment in geöffnetem Betriebszustand des reibschlüssigen Schaltelementes zum Synchronisieren des formschlüssigen Schaltelementes während der Schubrückschaltung betriebszustand abhängig variiert wird.

Wird bei Erkennen des geschlossenen Betriebszustandes des formschlüssigen Schaltelementes das im Bereich der Antriebsmaschineneinrichtung zur Verfügung stehende Drehmoment in Richtung eines angeforderten Wertes geführt und die Betätigung der Fahrzeugbremse definiert zurückgenommen, wird einerseits ein angeforderter Betriebszustand des Fahrzeuges in gewünschtem Umfang hergestellt und zusätzlich eine dauerhafte Belastung der Fahrzeugbremse vermieden.

Das Bremsmoment der Fahrzeugbremse wird bei einer vorteilhaften Variante des erfindungsgemäßen Verfahrens in Abhängigkeit des von der Antriebsmaschineneinrichtung zur Verfügung gestellten Drehmoments vorgegeben, um eine definierte Beschleunigung des Fahrzeugs darzustellen. Damit ist das während der Schubrückschaltung zuzuschaltende formschlüssige Schaltelement auf einfache Art und Weise in den für die Zuschaltung erforderlichen Betriebszustand überführbar, ohne dabei ein für einen Fahrer erwartbares Fahrverhalten eines Fahrzeugs zu verändern.

Ein Fahrkomfort wird mittels einer weiteren vorteilhaften Variante des erfindungsgemäßen Verfahrens dadurch verbessert, dass die Übertragungsfähigkeit des reibschlüssigen Schaltelementes in zumindest nahezu drehzahlsynchronem Betriebszustand des noch offenen formschlüssigen Schaltelementes und vor einer Erhöhung des im Bereich der Antriebsmaschineneinrichtung abstützbaren Teils des Abtriebsdrehmomentes auf einen definierten Wert angehoben wird, wobei das reibschlüssige Schaltelement spätestens ab einem Anstieg des im Bereich der Antriebsmaschineneinrichtung abstützbaren Teils des Abtriebsdrehmomentes in seinen vollständig geöffneten Betriebszustand überführt wird.

Wird zumindest ein Teil des im Bereich der Antriebsmaschineneinrichtung abstützbaren Abtriebsdrehmomentes im Bereich der Antriebsmaschineneinrichtung rekuperiert, wird der Rekuperationsbetrieb der Antriebsmaschineneinrichtung bei einer mit geringem Betätigungsaufwand durchführbaren Variante des erfindungsgemäßen Verfahrens bei Vorliegen der Anforderung zur Durchführung der Schubrückschaltung beendet.

Umfasst die Antriebsmaschineneinrichtung wenigstens eine elektrische Maschine und eine weitere Vorzugsweise als Brennkraftmaschine ausgeführte Antriebsmaschine, wird die elektrische Maschine im Schubbetrieb des Fahrzeugs bedarfsweise zum zumindest teilweisen Abstützen des Abtriebsdrehmomentes generatorisch betrieben, während zumindest ein Teil des Abtriebsdrehmomentes im Bereich der weiteren Antriebsmaschine abstützbar ist.

Bei einer vorteilhaften Variante des erfindungsgemäßen Verfahrens wird der im Bereich der elektrischen Maschine abstützbare Teil des Abtriebsdrehmomentes bei Vorliegen der Anforderung zur Durchführung einer Schubrückschaltung zur Reduzierung des Betätigungsaufwandes während der Schubrückschaltung bis auf null reduziert und das Abtriebsdrehmoment lediglich durch die weitere Antriebsmaschine zumindest teilweise abgestützt, wobei der zuvor von der elektrischen Maschine abgestützte Teil des Abtriebsdrehmomentes durch Betätigen der Fahrzeugbremse zunehmend im Bereich der Fahrzeugbremse abgestützt wird.

Wird zumindest das Rekuperationselement der elektrischen Maschine während der Schubrückschaltung durch Betätigen der Fahrzeugbremse zur Verfügung gestellt, ist eine angeforderte Schubrückschaltung unabhängig davon, ob sich der Fahrzeugantriebsstrang zum Zeitpunkt der Anforderung für die Durchführung der Schubrückschaltung im Rekuperationsbetrieb befindet oder nicht, immer in der gleichen Art und Weise durchführbar, ohne hierfür verschiedene Betätigungsroutinen vorhalten zu müssen.

Sowohl die in den Patentansprüchen angegebenen Merkmale als auch die in den nachfolgenden Ausführungsbeispielen des erfindungsgemäßen Gegenstandes angegebenen Merkmale sind jeweils für sich alleine oder in jeweiliger Kombination miteinander geeignet, den erfindungsgemäßen Gegenstand weiterzubilden.

Weitere Vorteile und vorteilhafte Ausführungsformen des erfindungsgemäßen Gegenstands ergeben sich aus den Patentansprüchen und den nachfolgend unter Bezugnahme auf die Zeichnung prinzipmäßig beschriebenen Ausführungsbeispielen, wobei zugunsten der Übersichtlichkeit für bau- und funktionsgleiche Bauteile dieselben Bezugszeichen verwendet werden.

Es zeigt:
Fig. 1 eine stark schematisierte Darstellung eines Fahrzeugantriebsstranges;
Fig. 2 eine detailliertere Darstellung des Fahrzeugantriebsstranges gemäß Fig. 1 mit einem als neun-Gang-Getriebe ausgeführten Automatgetriebe;
Fig. 3 ein Schaltschema des Automatgetriebes gemäß Fig. 2;
Fig. 4 eine Steuereinrichtung des Fahrzeugantriebsstranges gemäß Fig. 1; und
Fig. 5 mehrere Verläufe verschiedener Betriebsgrößen eines das Automatgetriebe gemäß Fig. 2 aufweisenden Fahrzeugantriebsstranges, die sich während verschiedener Betriebszustandsverläufe bei erfindungsgemäßem Betrieb des Fahrzeugantriebsstranges über der Zeit t einstellen.

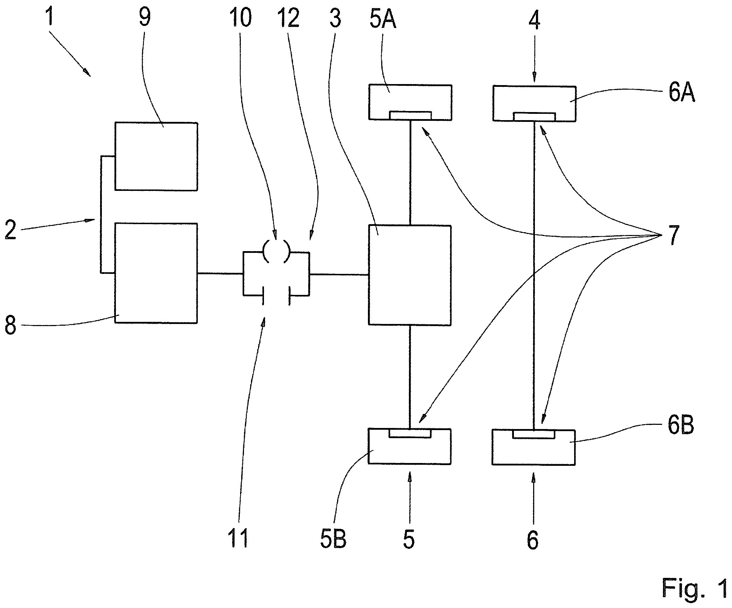

Fig. 1 zeigt eine stark schematisierte Darstellung eines Fahrzeugantriebsstranges 1 eines Fahrzeuges mit einer Antriebsmaschineneinrichtung 2, mit einem Getriebe bzw. einem Automatgetriebe 3 und mit einem Abtrieb 4, der vorliegend zwei antreibbare Fahrzeugachsen 5, 6 umfasst. Im Bereich von Rädern 5A, 5B und 6A, 6B der Fahrzeugachsen 5 und 6 ist eine an sich bekannte Fahrzeugbremse 7 vorgesehen, mittels der das Fahrzeug bei einer fahrerseitigen Betätigung eines Bremspedals verzögerbar ist.

Die Antriebsmaschineneinrichtung 2 umfasst vorliegend neben einer als Brennkraftmaschine ausgeführten Antriebsmaschine 8 eine elektrische Maschine 9, die sowohl motorisch als auch generatorisch betreibbar ist und beispielsweise über einen Riemen, eine Kette oder dergleichen mit der Antriebsmaschine 8 in Wirkverbindung steht, um die Antriebsmaschine 8 in gewünschtem Umfang starten zu können und zusätzlich während eines Schubbetriebes des Fahrzeugantriebsstranges 1 ein im Bereich des Abtriebs 4 anliegendes Abtriebsdrehmoment zumindest teilweise während eines so genannten Rekuperationsbetriebes der Antriebsmaschineneinrichtung 2 in elektrische Energie umwandeln zu können. Zusätzlich ist zwischen der Antriebsmaschine 8 und dem Getriebe 3 ein vorliegend als hydrodynamischer Drehmomentwandler 10 mit zugeordneter Wandlerüberbrückungskupplung 11 ausgeführtes Anfahrelement 12 vorgesehen.

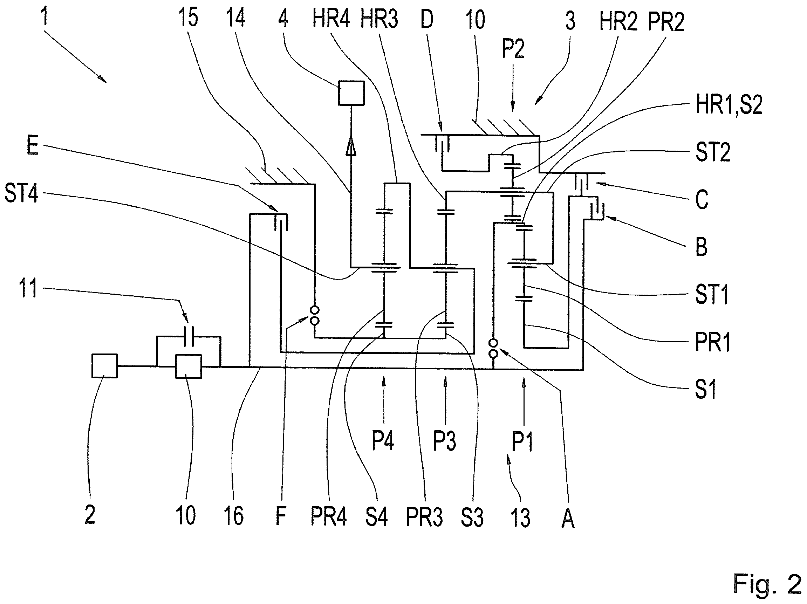

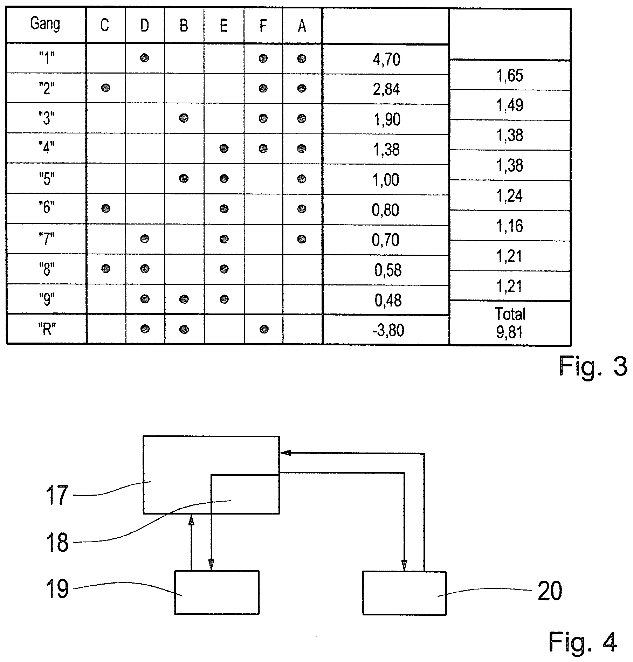

In Fig. 2 ist der Fahrzeugantriebsstrang 1 gemäß Fig. 1 detaillierter dargestellt und umfasst ein als 9-Gang-Getriebe ausgeführtes Automatgetriebe 3 mit sechs Schaltelementen A bis F. Die Schaltelemente B, C, D und E sind vorliegend als reibschlüssige Schaltelemente ausgebildet, während die Schaltelemente A und F formschlüssige Schaltelemente sind. Dabei stellen die Schaltelemente C, D und F so genannte Bremsen dar, während die Schaltelemente B, E und A als Kupplungen ausgeführt sind. Generell sind über die Schaltelemente A und F mehrere Zahnradpaarungen eines Radsatzes 13 des Getriebes 3 zur Darstellung verschiedener in Fig. 3 aufgelisteter Übersetzungen "1" bis "9" für Vorwärtsfahrt und einer Übersetzung "R" für Rückwärtsfahrt zu- und abschaltbar.

Ein Schaltschema des Getriebes 3 zeigt Fig. 3, wobei in dem Schaltschema jeweils die Schaltelemente A bis F zur Darstellung einer der Übersetzungen "1" bis "R" in geschlossenem Betriebszustand zu halten bzw. zu überführen sind, die durch einen Punkt gekennzeichnet sind, während die jeweils weiteren Schaltelemente A bis F gleichzeitig in ihren geöffneten Betriebszustand zu überführen bzw. in diesem zu halten sind. Zusätzlich ist in der vorletzten Spalte des Schaltschemas jeweils der mit der im Getriebe 3 eingelegten Übersetzung "1" bis "R" korrespondierende Übersetzungswert angegeben, während in der letzten Spalte des Schaltschemas der zwischen jeweils zwei zueinander benachbarten Übersetzungen vorliegende Gangsprung angegeben ist. Dabei weist die erste Übersetzung "1" für Vorwärtsfahrt den Übersetzungswert 4,70 auf, während die im Getriebe 3 einlegbare zweite Übersetzung "2" für Vorwärtsfahrt einen Übersetzungswert von 2,84 hat. Zwischen der ersten Übersetzung "1" für Vorwärtsfahrt und der zweiten Übersetzung "2" für Vorwärtsfahrt weist das Getriebe 3 einen Gangsprung von 1,65 auf. Insgesamt hat das Getriebe 3 auslegungsbedingt eine Gesamtspreizung von 9,81.

Getriebeeingangsseitig steht das Getriebe 3 über den hydrodynamischen Drehmomentwandler 10 mit der Antriebsmaschine 8 in Wirkverbindung. Dem hydrodynamischen Drehmomentwandler 10 ist vorliegend die Wandlerüberbrückungskupplung 11 zugeordnet, deren Übertragungsfähigkeit in an sich bekannter Art und Weise betriebszustandsabhängig variiert wird, um Verluste im Bereich des hydrodynamischen Drehmomentwandlers 10 zu minimieren. Getriebeausgangsseitig steht das Getriebe 3 über eine Getriebeausgangswelle 14 mit dem Abtrieb 4 in Wirkverbindung.

Das Getriebe 3 umfasst vorliegend vier Planetenradsätze P1 bis P4, wobei der erste und der zweite Planetenradsatz P1 und P2, die vorzugsweise als Minus-Planetenradsätze ausgeführt sind, einen schaltbaren Vorschaltradsatz bilden, während der dritte Planetenradsatz und der vierte Planetenradsatz P3 und P4 einen sogenannten Hauptradsatz bilden. Ein Sonnenrad S3 des dritten Planetenradsatzes P3 ist vorliegend mit einem Sonnenrad S4 des vierten Planetenradsatzes P4 drehfest verbunden. Die beiden Sonnenräder S3 und S4 sind in geschlossenem Betriebszustand des formschlüssigen Schaltelements F drehfest mit einem gehäusefesten Bauteil 15 verbunden und rotieren frei in geöffnetem Betriebszustand des formschlüssigen Schaltelements F. Das Sonnenrad S3 kämmt mit Planetenrädern PR3, die drehbar auf einem Planetensteg ST3 des dritten Planetenradsatzes P3 angeordnet sind. Des Weiteren stehen die Planetenräder PR3 mit einem Hohlrad HR3 des dritten Planetenradsatzes P3 in Eingriff. Das Sonnenrad S4 des vierten Planetenradsatzes P4 kämmt wiederum mit Planetenrädern PR4, die drehbar auf einem Planetensteg ST4 angeordnet sind, der mit der Getriebeausgangswelle 14 drehfest gekoppelt ist. Zusätzlich stehen die Planetenräder PR4 mit einem Hohlrad HR4 des vierten Planetenradsatzes P4 in Eingriff, das wiederum drehfest mit dem Planetensteg ST3 des dritten Planetenradsatzes P3 drehfest verbunden ist.

Der Planetensteg ST3 des dritten Planetenradsatzes P3 ist über das Schaltelement E mit einer Getriebeeingangswelle 16 des Getriebes 3 in Wirkverbindung bringbar.

Das Hohlrad HR3 des dritten Planetenradsatzes P3 ist drehfest mit einem Planetensteg ST2 des zweiten Planetenradsatzes P2 verbunden, der wiederum drehfest mit einem Planetensteg ST1 des ersten Planetenradsatzes P1 wirkverbunden ist. Auf dem Planetensteg ST2 drehbar gelagerte Planetenräder PR2 kämmen sowohl mit einem Hohlrad HR2 als auch mit einem Sonnenrad S2 des zweiten Planetenradsatzes P2, wobei das Hohlrad HR2 über das reibschlüssige Schaltelement D mit dem gehäusefesten Bauteil 15 drehfest verbindbar ist. Das Sonnenrad S2 des zweiten Planetenradsatzes P2 ist wiederum drehfest mit einem Hohlrad HR1 des ersten Planetenradsatzes P1 verbunden, das mit Planetenrädern PR1 kämmt, die wiederum mit einem Sonnenrad S1 des ersten Planetenradsatzes P1 in Eingriff stehen. Das Sonnenrad S1 ist über das reibschlüssige Schaltelement C mit dem gehäusefesten Bauteil 15 drehfest verbindbar und über das reibschlüssige Schaltelement B mit der Getriebeeingangswelle 16 in Wirkverbindung bringbar. Zusätzlich ist das Sonnenrad S1 in geschlossenem Betriebszustand des Schaltelements B über das formschlüssige Schaltelement A mit dem Hohlrad HR 1 des ersten Planetenradsatzes P1 drehfest verbunden.

Für den Betrieb des Fahrzeugantriebsstranges 1 gemäß Fig. 1 bzw. gemäß Fig. 2 sind mehrere in Fig. 4 gezeigte Steuermodule 17 bis 20 vorgesehen. Dabei stellt das Steuermodul 17 ein so genanntes Fahrzeugantriebsstrangsteuermodul dar, das sowohl mit dem ein Getriebesteuermodul darstellendes Steuermodul 19 als auch mit dem Fahrzeugbremsensteuermodul bzw. dem Steuermodul 20 kommuniziert bzw. zusammenwirkt. Zusätzlich ist das Steuermodul 18 im Wesentlichen für den Betrieb der elektrischen Maschine 9 vorgesehen, das ebenfalls mit dem Steuermodul 19 in der nachfolgend näher beschriebenen Art und Weise kommuniziert.

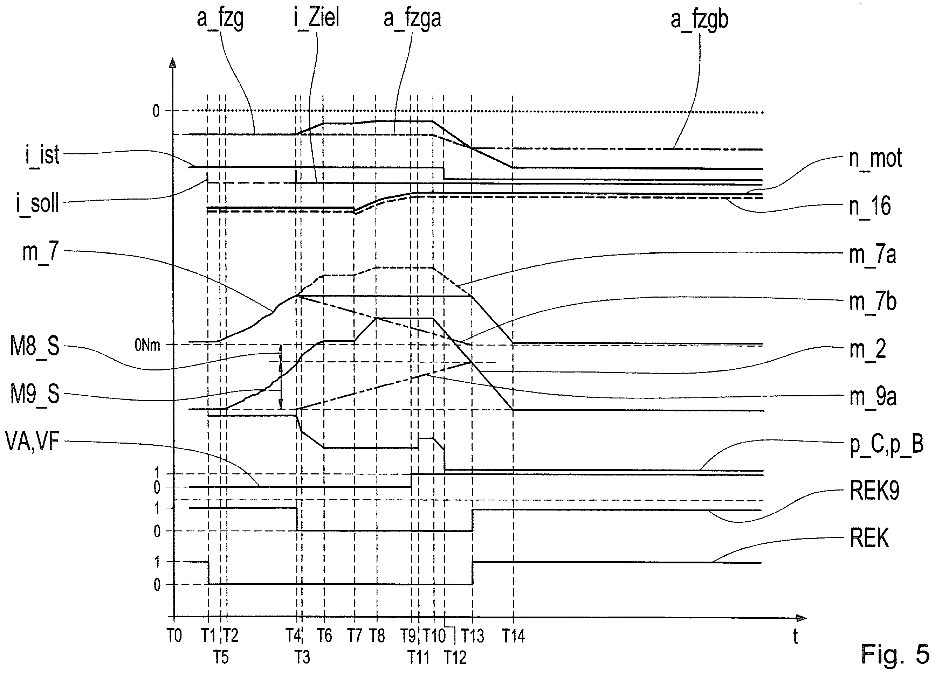

Fig. 5 zeigt Verläufe verschiedener Betriebsgrößen des Fahrzeugantriebsstranges 1 gemäß Fig. 1 und Fig. 2, die sich während unterschiedlicher Betriebszustandsverläufe des Fahrzeugantriebsstranges 1 über der Zeit t einstellen. Im gezeigten Beispiel befindet sich der Fahrzeugantriebsstrang 1 zu einem Zeitpunkt T0 im Schubbetrieb und im Getriebe 3 ist entweder die achte Übersetzung "8" oder die fünfte Übersetzung "5" für Vorwärtsfahrt eingelegt.

Hierbei kann grundsätzlich jede Übersetzungsstufe eingelegt sein, von welcher ausgehend bei einer Rückschaltung ein formschlüssiges Schaltelement, in diesem Falle entweder die Klaue A oder die Klaue F, eingelegt wird. Dies ist beispielsweise der Fall wenn ausgehend von der achten Übersetzungsstufe "8" oder einer neunten Übersetzungsstufe "9" in eine Übersetzungsstufe unterhalb der achten Übersetzungsstufe "8" geschaltet wird, oder wenn ausgehend von einer sechsten Übersetzungsstufe "6" oder einer siebenten Übersetzungsstufe "7" in eine Übersetzungsstufe unterhalb der fünften Übersetzungsstufe "5" geschaltet wird.

Während des Schubbetriebes des Fahrzeugantriebsstranges 1 wird ein im Bereich des Abtriebs 4 anliegendes Abtriebsdrehmoment im Bereich der Antriebsmaschineneinrichtung 2 derart abgestützt, dass ein mit dem Fahrzeugantriebsstrang 1 ausgeführtes Fahrzeug dem Verlauf a_fzg der Fahrzeugbeschleunigung entsprechend in konstantem Umfang verzögert wird.

Hierfür wird die Antriebsmaschineneinrichtung 2 im Schubbetrieb gehalten, während dem sowohl die Antriebsmaschine 8 als auch die elektrische Maschine 9, die dann generatorisch betrieben wird, ein Schubmoment zur Verfügung stellen. Dabei liefert die Antriebsmaschine 8 im vorliegend betrachteten Ausführungsbeispiel des Fahrzeugantriebsstranges 1 ein Schubdrehmoment M8_S, das in etwa -30 Nm entspricht. Das im Bereich der elektrischen Maschine 9 erzeugte Schubmoment M9_S beträgt etwa -150 Nm und ist betriebszustandsabhängig über das Steuermodul 18 variierbar. Der Rekuperationsbetrieb der elektrischen Maschine 9 wird in Abhängigkeit einer fahrstrategieseitigen Anforderung durchgeführt. Ein Verlauf REK weist bei aktiviertem Rekuperationsbetrieb der elektrischen Maschine 9 den Wert 1 auf, während bei Vorliegen einer Anforderung zum Abschalten des Rekuperationsbetriebes der elektrischen Maschine 9 der Verlauf REK vom Wert 1 auf den Wert 0 umspringt.

Zusätzlich zeigt Fig. 5 jeweils einen Verlauf n_mot der Drehzahl der Antriebsmaschine 8 sowie eine Drehzahl n_16 der Getriebeeingangswelle 16, die vorliegend im Wesentlichen gleich sind. Dies resultiert aus der Tatsache, dass während der den in Fig. 5 dargestellten Verläufen zugrundeliegenden Betriebszustandsverläufen die Wandlerüberbrückungskupplung 11 vollständig geschlossen ist und der hydrodynamische Drehmomentwandler 10 zur Vermeidung von Verlustleistungen überbrückt ist.

Zu einem Zeitpunkt T1 ergeht eine Anforderung für eine Schubrückschaltung im Getriebe 3 ausgehend von der achten Übersetzung "8" oder ausgehend von der fünften Übersetzung "5" in Richtung der siebten Übersetzung "7" bzw. in Richtung der vierten Übersetzung "4" für Vorwärtsfahrt. Hierfür ist dem Schaltschema gemäß Fig. 3 entsprechend entweder das reibschlüssige Schaltelement C abzuschalten und das formschlüssige Schaltelement A zuzuschalten oder das reibschlüssige Schaltelement B abzuschalten und das formschlüssige Schaltelement F zuzuschalten.

Auch hierbei gilt, dass grundsätzlich jede Übersetzungsstufe eingelegt sein kann, von der ausgehend bei einer Rückschaltung ein formschlüssiges Schaltelement, in diesem Falle entweder die Klaue A oder die Klaue F, eingelegt wird. Dies ist beispielsweise der Fall wenn ausgehend von der achten Übersetzungsstufe "8" oder einer neunten Übersetzungsstufe "9" in eine Übersetzungsstufe unterhalb der achten Übersetzungsstufe "8" geschaltet wird, oder wenn ausgehend von einer sechsten Übersetzungsstufe "6" oder einer siebenten Übersetzungsstufe "7" in eine Übersetzungsstufe unterhalb der fünften Übersetzungsstufe "5" geschaltet wird.

Mit Vorliegen der Anforderung für die Schubrückschaltung im Getriebe 3 springt der Verlauf REK vom Wert 1 auf 0 um und es wird vom Steuermodul 19 des Getriebes 3 eine Anforderung für das Beenden des Rekuperationsbetriebes der elektrischen Maschine 9 ausgegeben. Zusätzlich weicht ab dem Zeitpunkt T1 ein Verlauf i_soll der im Getriebe 3 einzulegenden Soll-Übersetzung von einem Verlauf i_ist der im Getriebe 3 aktuell eingelegten Ist-Übersetzung ab. Das jeweils abzuschaltende reibschlüssige Schaltelement C bzw. B wird ab dem Zeitpunkt T1 dem Verlauf p_C bzw. p_B des Betätigungsdruckes des reibschlüssigen Schaltelementes C bzw. B entsprechend mit einem Betätigungsdruck beaufschlagt, der das Schließdruckniveau p_zu aufweist, d.h. dass das entsprechende reibschlüssige Schaltelement C bzw. B geschlossen ist. Bei einem geschlossenen reibschlüssigen Schaltelement sind beide Schaltelementhälften drehfest miteinander verbunden, bzw. diese laufen synchron bzw. schlupffrei mit gleicher Drehzahl um.

Um die angeforderte Schubrückschaltung mit hoher Spontanität umsetzen zu können und eine aktuell vorliegende Fahrzeugbeschleunigung wenigstens annähernd in unverändertem Umfang beibehalten zu können, erhält das Steuermodul 20 der Fahrzeugbremse 7 von dem Steuermodul 17 des Fahrzeugantriebsstranges 1 eine entsprechende Anforderung zur Darstellung eines Bremsmomentes, um das ab einem Zeitpunkt T2 rampenförmig verringerte Schubmoment m_2 der Antriebsmaschineneinrichtung 2, das durch Reduzierung des Schubmomentes der elektrischen Maschine 9 verkleinert wird, entsprechend kompensieren zu können. Hierfür wird ein im Bereich der Fahrzeugbremse 7 zur Verfügung stehendes Bremsmoment dem in Fig. 5 dargestellten Verlauf m_7 entsprechend ab einem vor dem Zeitpunkt T2 liegenden Zeitpunkt T3 bis zu einem Zeitpunkt T4 rampenförmig angehoben, zu dem das Schubmoment der elektrischen Maschine 9 im Wesentlichen gleich null ist.

Wird im Bereich des Steuermoduls 18 der elektrischen Maschine 9 erkannt, dass das Schubmoment der elektrischen Maschine 9 im Wesentlichen gleich null ist, wird der Rekuperationsbetrieb der elektrischen Maschine 9 beendet und ein Verlauf REK 9 vom Wert 1 auf 0 gesetzt. Zusätzlich wird zum Zeitpunkt T4 der Betätigungsdruck p_C bzw. p_B des abzuschaltenden reibschlüssigen Schaltelementes C bzw. B über eine erste Druckrampe bis zu einem Zeitpunkt T5 abgesenkt und das abzuschaltende reibschlüssige Schaltelement C oder B in einem einen hohen Fahrkomfort gewährleistenden Umfang für das Abschalten vorbereitet. Zum Zeitpunkt T4 springt der Verlauf i_ziel des aktuell im Getriebe 3 einzulegenden Zielganges auf das Niveau des Verlaufs i_soll des angeforderten Soll-Ganges um.

Ab dem Zeitpunkt T5 wird der Betätigungsdruck p_C bzw. p_B des abzuschaltenden reibschlüssigen Schaltelementes C bzw. B über eine zweite und einen kleineren Gradienten als die erste Druckrampe aufweisende Druckrampe bis zu einem Zeitpunkt T6 weiter reduziert. Dabei wird das abzuschaltende reibschlüssige Schaltelement C bzw. B in einen Betriebszustand überführt, zu dem die Übertragungsfähigkeit des abzuschaltenden reibschlüssigen Schaltelementes C bzw. B im Wesentlichen gleich null ist und ein Anheben des Betätigungsdrucks p_C bzw. p_B des abzuschaltenden reibschlüssigen Schaltelementes C bzw. B bzw. der in Schließrichtung des abzuschaltenden reibschlüssigen Schaltelementes C bzw. B wirkenden Betätigungskraft einen sofortigen Anstieg der Übertragungsfähigkeit des abzuschaltenden reibschlüssigen Schaltelementes C bzw. B bewirkt.

Des Weiteren wird ab dem Zeitpunkt T4 das Schubmoment m_2 der Antriebsmaschineneinrichtung 2 durch entsprechende Betätigung der Antriebsmaschine 8 zunächst auf den Wert null geführt, weshalb die Verzögerung des mit dem Fahrzeugantriebsstrang 1 ausgeführten Fahrzeuges dem Verlauf a_fzg entsprechend abnimmt. Das Schubmoment m_2 ist vorliegend zum Zeitpunkt T6 im Wesentlichen gleich null und wird bis zu einem weiteren Zeitpunkt T7 auf diesem Niveau belassen. Ab dem Zeitpunkt T7 wird das von der Antriebsmaschine 8 zur Verfügung stehende Drehmoment aufgrund eines angeforderten positiven Motoreingriffes rampenförmig bis zu einem Zeitpunkt T8 angehoben, um das zuzuschaltende formschlüssige Schaltelement A bzw. F in einen für die Zuschaltung erforderlichen Betriebszustand zu überführen.

Ein für das Zuschalten eines formschlüssigen Schaltelementes erforderlicher Betriebszustand entspricht unter anderem einem im Wesentlichen lastfreien Zustand eines formschlüssigen Schaltelementes, zu dem kein nennenswertes Drehmoment über das formschlüssige Schaltelement zu übertragen ist. Zusätzlich ist eine Differenzdrehzahl zwischen den miteinander formschlüssigen in Eingriff zu bringenden Schaltelementhälften eines formschlüssigen Schaltelementes auf Werte innerhalb eines Differenzdrehzahlfensters um den Wert null herum zu führen, um ein formschlüssiges Schaltelement mit geringen Betätigungskräften bei gleichzeitig niedrigen Bauteilbelastungen sicher ausgehend von seinem geöffneten Betriebszustand in seinen geschlossenen Betriebszustand überführen zu können.

Ab dem Zeitpunkt T8 wird das von der Antriebsmaschine 8 zur Verfügung gestellte positive Drehmoment bis zu einem Zeitpunkt T10 konstant gehalten, zu dem der geschlossene Betriebszustand des zuzuschaltenden formschlüssigen Schaltelementes A bzw. F sicher erkannt wird, wobei das zuzuschaltende formschlüssige Schaltelement A bzw. F vorliegend bereits zum Zeitpunkt T9 geschlossen ist und daher der Verlauf VA bzw. VF zum Zeitpunkt T9 von null auf den Wert 1 umspringt.

Vor dem Zeitpunkt T10 und nach dem Zeitpunkt T9 wird der Betätigungsdruck p_C bzw. p_B des abzuschaltenden reibschlüssigen Schaltelementes C bzw. B im dargestellten Umfang sprungförmig angehoben, um eventuelle den Fahrkomfort beeinträchtigende Reaktionsmomente im Fahrzeugantriebsstrang 1 zu dämpfen, die aus der Schubrückschaltung resultieren. Alternativ hierzu kann das Anheben des Betätigungsdrucks p_C bzw. des Betätigungsdrucks p_B auch rampenförmig oder in einem beliebigen Verlauf erfolgen.

Aufgrund des zum Zeitpunkt T10 rampenförmig verringerten Schubmoments m_2 der Antriebsmaschineneinrichtung 2 bzw. eines verringerten Bremsmoments m_7a wird das Fahrzeug ab dem Zeitpunkt T10 dem Verlauf a_fzg entsprechend in stärkerem Umfang verzögert.

Ab dem Zeitpunkt T10 wird der Betätigungsdruck p_C bzw. p_B des abzuschaltenden reibschlüssigen Schaltelementes C bzw. B rampenförmig auf das Betätigungsdruckniveau zum Zeitpunkt T6 abgesenkt. Zusätzlich wird der Betätigungsdruck p_C bzw. p_B des abzuschaltenden reibschlüssigen Schaltelementes C bzw. B ab einem weiteren Zeitpunkt T12 sprungförmig auf das Öffnungsdruckniveau p_auf geführt, zu dem das abzuschaltende reibschlüssige Schaltelement C bzw. B in seinem vollständig geöffneten Betriebszustand vorliegt. Alternativ hierzu kann das Absenken des Betätigungsdrucks p_C bzw. des Betätigungsdrucks p_B auch rampenförmig oder in einem beliebigen Verlauf erfolgen.

Zum Zeitpunkt T12, zu dem im Getriebe 3 die angeforderte siebte Übersetzung "7" bzw. die vierte Übersetzung "4" für Vorwärtsfahrt im angeforderten Umfang eingelegt ist, springt der Verlauf i_ist des Ist-Ganges auf das Niveau des Verlaufes i_soll sowie des Verlaufes i_ziel. Dies gilt grundsätzlich für jede Übersetzung, welche durch ein Schließen eines formschlüssigen Schaltelements, in diesem Falle der Klaue A oder der Klaue F, bei einer Rückschaltung aus einer höheren Übersetzungsstufe heraus eingelegt wurde. Zusätzlich wird zum Zeitpunkt T10 das Drehmoment m_2 der Antriebsmaschineneinrichtung 2 zunächst durch Führen des von der Antriebsmaschine 8 zur Verfügung gestellten Drehmomentes auf das Drehmomentniveau zum Zeitpunkt T4 verändert.

Zum Zeitpunkt T13 erreicht die Antriebsmaschineneinrichtung 2 durch entsprechende Betätigung der Antriebsmaschine 8 das Schubdrehmomentniveau zum Zeitpunkt T4. Dieses Ereignis löst vorliegend wiederum eine Anforderung zur Darstellung des Rekuperationsbetriebes der elektrischen Maschine 9 aus, weshalb der Verlauf REK wiederum von null auf den Wert 1 umspringt und die elektrische Maschine 9 dem Verlauf REK9 entsprechend ab dem Zeitpunkt T13 generatorisch betrieben wird. Das Schubdrehmoment der elektrischen Maschine 9 wird durch das Steuermodul 18 entsprechend vorgegeben, bis das Schubdrehmoment m_2 der Antriebsmaschineneinrichtung 2 zu einem Zeitpunkt T14 das zum Zeitpunkt T1 vorliegende Schubdrehmomentniveau erreicht.

Um das Fahrzeug mit einer für den Fahrer erwartbaren Fahrzeugbeschleunigung betreiben zu können, wird das im Bereich der Fahrzeugbremse 7 eingestellte Bremsmoment m7 ab dem Zeitpunkt T13 in Abhängigkeit des Verlaufes m_2 der Antriebsmaschineneinrichtung 2 entsprechend reduziert und bis zum Zeitpunkt T14 auf null abgesenkt. Ab dem Zeitpunkt T 14 wird das mit dem Fahrzeugantriebsstrang 1 ausgeführte Fahrzeug wiederum mit konstanter Verzögerung betrieben.

Aufgrund der vorbeschriebenen Vorgehensweise wird das im Bereich der Fahrzeugbremse 7 zur Verfügung gestellte Bremsmoment zwischen den Zeitpunkten T4 und T13 im Wesentlichen konstant gehalten, während die Fahrzeugverzögerung dem Verlauf a_fzg entsprechend zwischen den Zeitpunkten T4 und T10 zunächst im dargestellten Umfang absinkt.

Um das Fahrzeug zwischen den Zeitpunkten T4 und T10 mit geringem Aufwand mit einer konstanten Fahrzeugverzögerung betreiben zu können, kann das durch die Fahrzeugbremse 7 zur Verfügung gestellte Bremsmoment beispielsweise zwischen den Zeitpunkten T4 und T13 dem gestrichelten Verlauf m_7a des Bremsmomentes der Fahrzeugbremse 7 entsprechend angehoben werden. Der sich dadurch einstellende Verlauf der Fahrzeugverzögerung ist unter dem Bezugszeichen a_fzga und mit strichlierter Linie in Fig. 5 näher gezeigt.

Zusätzlich zeigt Fig. 5 zwischen den Zeitpunkten T4 und T13 einen weiteren Verlauf m_7b des Bremsmomentes der Fahrzeugbremse 7, der sich während eines weiteren möglichen Betriebszustandsverlaufes des mit dem Fahrzeugantriebsstrang 1 ausgeführten Fahrzeuges ab dem Zeitpunkt T4 einstellt. Während des weiteren Betriebszustandsverlaufes ergeht ab dem Zeitpunkt T4 eine dem zwischen den Zeitpunkten T4 und T13 in Fig. 5 dargestellten Verlauf m9a entsprechende Anforderung zur Reduzierung des im Bereich der elektrischen Maschine 9 darzustellenden Rekuperationsdrehmomentes in Richtung null während der Durchführung der angeforderten Schubrückschaltung. Eine solche Anforderung wird beispielsweise dann generiert, wenn ein der elektrischen Maschine 9 zugeordneter elektrischer Speicher nahezu vollständig beladen ist oder ein solcher elektrischer Speicher eine zulässige Betriebstemperatur überschritten hat. Die beiden letztgenannten Betriebszustände des der elektrischen Maschine 9 zugeordneten elektrischen Speichers verhindern einen Rekuperationsbetrieb der elektrischen Maschine 9, weshalb der zum Zeitpunkt T4 beendete Rekuperationsbetrieb der elektrischen Maschine 9 bei diesem Extremfall ab dem Zeitpunkt T13 nicht im vorbeschriebenen Umfang wieder aktiviert wird.

Um zum Zeitpunkt T13 eine unerwünschte und von einem Fahrer nicht erwartete Veränderung der Fahrzeugbeschleunigung zu vermeiden, wird das im Bereich der Fahrzeugbremse 7 zur Verfügung stehende Bremsmoment dem Verlauf m_7b entsprechend rampenförmig zwischen den Zeitpunkten T4 und T13 ausgehend von dem zum Zeitpunkt T4 vorliegenden Niveau auf null reduziert.

Die daraus resultierende Veränderung der Fahrzeugbeschleunigung ist in Fig. 5 zwischen den Zeitpunkten T4 und T13 nicht näher gezeigt. Ab dem Zeitpunkt T13 stellt sich jedoch eine dem Verlauf a_fzgb entsprechende konstante Fahrzeugverzögerung ein, die kleiner ist als die sich während der zuvor beschriebenen Vorgehensweise ab dem Zeitpunkt T13 einstellende Fahrzeugverzögerung.

Mittels der erfindungsgemäßen Vorgehensweise wird auf einfache Art und Weise vermieden, dass aufgrund eines Schubmoments, das während eines Rekuperationsbetriebes der elektrischen Maschine 9 zusätzlich in den Fahrzeugantriebsstrangs 1 eingeleitet wird, ein zur Synchronisierung des formschlüssigen Schaltelements A bzw. F durch die Antriebsmaschineneinrichtung 2 zur Verfügung gestelltes positives Drehmoment eine für einen Fahrer spürbare Reduktion der aktuell vorliegenden Fahrzeugverzögerung verursacht.

Um ein Beschleunigungsniveau eines mit dem Fahrzeugantriebsstrang 1 ausgeführten Fahrzeuges trotz des von der Antriebsmaschine 8 für das Synchronisieren des zuzuschaltenden formschlüssigen Schaltelements A bzw. F aufgebrachten positiven Drehmomentes wenigstens annähernd auf dem zum Zeitpunkt der Anforderung für die Schubrückschaltung zu halten, wird über die Fahrzeugbremse 7 eine Kompensation des ansonsten die Fahrzeugverzögerung verändernden und im Bereich der Antriebsmaschineneinrichtung 2 zur Verfügung gestellten Drehmomentes durchgeführt. Dabei erfolgt die Aktuierung der Fahrzeugbremse 7 mittels eines vorgegebenen Drehmomentes bzw. Bremsdruckes. Die Anforderung des aufzubringenden Bremsmomentes bzw. Bremsdruckes erfolgt im Bereich des Steuermoduls 17 und/oder des Steuermoduls 18 der elektrischen Maschine 9.

Mittels der erfindungsgemäßen Vorgehensweise besteht auf einfache Art und Weise die Möglichkeit, eine bisher aus dem positiven Motoreingriff resultierende Beschleunigungsänderung des Fahrzeuges über die Kompensationsbremsung im Bereich der Fahrzeugbremse 7 während der Durchführung einer angeforderten Schubrückschaltung zu verhindern. Hierfür wird mittels dem beispielsweise im Bereich einer Motorsteuerung implementierten Steuermodul 17 oder mittels dem Steuermodul 18 durch Einlesen des vom Steuermodul 19 des Getriebes 3 angeforderten positiven Motoreingriffes sowie einer aktuellen Getriebestrangverstärkung ein entsprechendes Bremsmoment bzw. ein entsprechender Bremsdruck für die Fahrzeugbremse 7 generiert.

Ergeht die Anforderung für die Durchführung der Schubrückschaltung vorliegend zu einem Zeitpunkt T1, der auf einfache Art und Weise um einen definierten Zeitwert bzw. Offset vor dem Zeitpunkt liegt, zu dem üblicherweise eine Schubrückschaltung ausgehend von einem Betriebszustand des Fahrzeugantriebsstranges 1 angefordert wird, zu dem keine Rekuperation im Bereich der elektrischen Maschine 9 durchgeführt wird, ist die Schubrückschaltung im Getriebe 3 unabhängig davon durchführbar, ob die Schaltanforderung während eines Rekuperationsbetriebes im Bereich der elektrischen Maschine 9 oder bei nicht vorliegender Rekuperation im Bereich der elektrischen Maschine 9 erfolgt. Hierfür ist der definierte Zeitwert so zu wählen, dass das im Bereich der elektrischen Maschine 9 zur Verfügung gestellte Rekuperationsdrehmoment bzw. Schubmoment innerhalb des definierten Zeitwertes bis zum eigentlichen Start der Schubrückschaltung auf null geführt werden kann. Im Anschluss daran ist die Schubrückschaltung unabhängig von einem zuvor aktivierten Rekuperationsbetrieb der elektrischen Maschine 9 mit derselben Drucksteuerung im Bereich des jeweils abzuschaltenden reibschlüssigen Schaltelementes C bzw. B sowie mit der gleichen Drehmomentführung im Bereich der Antriebsmaschine 8 durchführbar.

Damit sind bestehende Fahrzeugantriebsstränge, die bislang ohne eine elektrische Maschine ausgeführt sind, mit geringem Aufwand erweiterbar und über große Betriebsbereiche im bisherigen Umfang betätigbar bzw. betreibbar. Das bedeutet, dass Schaltungen im Getriebe 3 unabhängig von einem zuvor aktivierten Rekuperationsbetrieb betriebszustandsabhängig immer zum gleichen Zeitpunkt durchgeführt werden und somit für einen Fahrer ein erwartbares Fahrverhalten eines mit dem Fahrzeugantriebsstrang 1 ausgeführten Fahrzeuges zur Verfügung stellbar ist.

### Bezugszeichen

- 1: Fahrzeug
- 2: Antriebsmaschineneinrichtung
- 3: Getriebe, Automatgetriebe
- 4: Abtrieb
- 5: Fahrzeugachse
- 5A, 5B: Rad
- 6: Fahrzeugachse
- 6A, 6B: Rad
- 7: Fahrzeugbremse
- 8: Antriebsmaschine
- 9: elektrische Maschine
- 10: hydrodynamischer Drehmomentwandler
- 11: Wandlerüberbrückungskupplung
- 12: Anfahrelement
- 13: Radsatz
- 14: Getriebeausgangswelle
- 15: gehäusefestes Bauteil
- 16: Getriebeeingangswelle
- 17 bis 20: Steuermodul
- "1" bis "9": Übersetzung für Vorwärtsfahrt
- "R": Übersetzung für Rückwärtsfahrt
- A bis F: Schaltelement
- a_fzg: Fahrzeugbeschleunigung
- HR1 bis HR4: Hohlrad
- i_ist: Übersetzung
- i_soll: Soll-Übersetzung
- i_ziel: Ziel-Übersetzung
- m_2: Drehmoment der Antriebsmaschineneinrichtung
- m_7: Bremsmoment
- m_7a: Bremsmoment
- m_7b: Bremsmoment
- M8_S: Schubdrehmoment der Antriebsmaschine
- M9_S: Schubmoment der elektrischen Maschine
- m_9a: Anforderung des Rekuperationsdrehmomentes
- p_auf: Öffnungsdruckniveau
- p_B: Betätigungsdruck des Schaltelements B
- p_C: Betätigungsdruck des Schaltelements C
- p_zu: Schließdruckniveau
- P1 bis P4: Planetenradsatz
- PR1 bis PR4: Planetenrad
- REK: Verlauf
- REK9: Verlauf
- S1 bis S4: Sonnenrad
- ST1 bis ST4: Planetensteg
- t: Zeit
- T0 bis T14: diskreter Zeitpunkt
- VA, VF: Verlauf

## Patentansprüche

1. Verfahren zum Betreiben eines Fahrzeuges mit einem Fahrzeugantriebsstrang (1) und mit einer Fahrzeugbremse (7) während einer Rückschaltung in einem Automatgetriebe (3) im Schubbetrieb des Fahrzeuges, während der zumindest ein reibschlüssiges Schaltelement (C; B) zu öffnen und ein formschlüssiges Schaltelement (A; F) zu schließen ist, wobei zum Zeitpunkt einer Anforderung der Schubrückschaltung im Bereich einer Antriebsmaschineneinrichtung (2) ein an einem Abtrieb (4) anliegendes Abtriebsdrehmoment zumindest teilweise abgestützt wird, dadurch gekennzeichet, dass die Antriebsmaschineneinrichtung (2) vor der Durchführung der Schubrückschaltung zur Reduzierung des im Bereich der Antriebsmaschineneinrichtung (2) abstützbaren Teils des Abtriebsdrehmomentes betätigt und ein Teil des Abtriebsdrehmomentes im Bereich der Fahrzeugbremse (7) durch entsprechende Betätigung der Fahrzeugbremse (7) abgestützt wird, und, dass das reibschlüssige Schaltelement (C; B) ab dem Zeitpunkt (T6), ab dem der Teil des im Bereich der Antriebsmaschineneinrichtung (2) abstützbaren Abtriebsdrehmomentes im Wesentlichen gleich null ist, in einen Betriebszustand überführt wird, in dem die Übertragungsfähigkeit des reibschlüssigen Schaltelementes (C; B) gleich null ist und ein Anheben der Betätigungskraft einen sofortigen Anstieg der Übertragungsfähigkeit des reibschlüssigen Schaltelementes (C; B) bewirkt.

2. Verfahren nach Anspruch 1, **dadurch gekennzeichnet, dass** die Übertragungsfähigkeit des reibschlüssigen Schaltelementes (C; B) bei Vorliegen der Anforderung zur Durchführung der Schubrückschaltung und bei Unterschreiten eines Schwellwertes (M8_S) des im Bereich der Antriebsmaschineneinrichtung (2) abstützbaren Abtriebsdrehmomentes reduziert wird.

3. Verfahren nach einem der Ansprüche 1 oder 2, **dadurch gekennzeichnet, dass** das von der Antriebsmaschineneinrichtung (2) zu Verfügung stehende Drehmoment (m_2) in geöffnetem Betriebszustand des reibschlüssigen Schaltelementes (C; B) zum Synchronisieren des formschlüssigen Schaltelementes (A; F) während der Schubrückschaltung variiert wird.

4. Verfahren nach einem der Ansprüche 1 bis 3, **dadurch gekennzeichnet, dass** bei Erkennen des geschlossenen Betriebszustandes des formschlüssigen Schaltelementes (A; F) das im Bereich der Antriebsmaschineneinrichtung (2) zur Verfügung stehende Drehmoment in Richtung eines angeforderten Wertes geführt und die Betätigung der Fahrzeugbremse (7) definiert zurückgenommen wird.

5. Verfahren nach einem der Ansprüche 1 bis 4, **dadurch gekennzeichnet, dass** das Bremsmoment der Fahrzeugbremse (7) in Abhängigkeit des im Bereich der Antriebsmaschineneinrichtung (2) zur Verfügung gestellten Drehmoments (m_2) eingestellt wird, um eine definierte Beschleunigung (a_fzg) des Fahrzeuges darzustellen.

6. Verfahren nach einem der Ansprüche 1 bis 5, **dadurch gekennzeichnet, dass** die Übertragungsfähigkeit des reibschlüssigen Schaltelementes (C; B) in zumindest nahezu drehzahlsynchronem Betriebszustand des noch offenen formschlüssigen Schaltelementes (A; F) und vor einer Erhöhung des im Bereich der Antriebsmaschineneinrichtung (2) abstützbaren Teils des Abtriebsdrehmomentes auf einen definierten Wert angehoben wird, wobei das reibschlüssige Schaltelement (C; B) spätestens ab einem Anstieg des im Bereich der Antriebsmaschineneinrichtung (2) abstützbaren Teils des Abtriebsdrehmomentes in seinen vollständig geöffneten Betriebszustand überführt wird.

7. Verfahren nach einem der Ansprüche 1 bis 6, **dadurch gekennzeichnet, dass** zumindest ein Teil des im Bereich der Antriebsmaschineneinrichtung (2) abstützbaren Abtriebsdrehmomentes im Bereich der Antriebsmaschineneinrichtung (2) rekuperiert wird, wobei der Rekuperationsbetrieb der Antriebsmaschineneinrichtung (2) bei Vorliegen der Anforderung zur Durchführung der Schubrückschaltung beendet wird.

8. Verfahren nach einem der Ansprüche 1 bis 7, **dadurch gekennzeichnet, dass** die Antriebsmaschineneinrichtung (2) wenigstens eine elektrische Maschine (9) und eine weitere vorzugsweise als Brennkraftmaschine ausgeführte Antriebsmaschine (8) umfasst, wobei die elektrische Maschine (9) im Schubbetrieb des Fahrzeuges bedarfsweise zum zumindest teilweisen Abstützen des Abtriebsdrehmomentes generatorisch betrieben wird und zumindest ein Teil des Abtriebsdrehmomentes im Bereich der weiteren Antriebsmaschine (8) abstützbar ist.

9. Verfahren nach Anspruch 8, **dadurch gekennzeichnet, dass** der im Bereich der elektrischen Maschine (9) abstützbare Teil des Abtriebsdrehmomentes bei Vorliegen der Anforderung zur Durchführung einer Schubrückschaltung bis auf null reduziert wird, bis das Abtriebsdrehmoment lediglich durch die weitere Antriebsmaschine (8) zumindest teilweise abgestützt wird, wobei der zuvor von der elektrischen Maschine (9) abgestützte Teil des Abtriebsdrehmomentes durch Betätigen der Fahrzeugbremse (7) zunehmend in deren Bereich abgestützt wird.

10. Verfahren nach Anspruch 8 oder 9, **dadurch gekennzeichnet, dass** zumindest das Rekuperationsdrehmoment der elektrischen Maschine (9) während der Schubrückschaltung durch Betätigen der Fahrzeugbremse (7) zur Verfügung gestellt wird.

## Claims

1. Method for operating a vehicle having a vehicle drivetrain (1) and having a vehicle brake (7) while shifting down in an automatic transmission (3) in the coasting operation of the vehicle, during which at least one friction-fitting shifting element (C; B) is to be opened and one form-fitting shifting element (A; F) is to be closed, wherein in the region of a drive machine installation (2) a drive torque which bears on an output (4) is at least partially supported at the point in time of requesting the coasting downshift, **characterized in that** the drive machine installation (2), prior to carrying out the coasting downshift, is activated for reducing that part of the drive torque that is capable of being supported in the region of the drive machine installation (2), and part of the drive torque in the region of the vehicle brake (7) is supported by a corresponding activation of the vehicle brake (7), and **in that** the friction-fitting shifting element (C; B), as from the point in time (T6) when that part of the drive torque that is capable of being supported in the region of the drive machine installation (2) is substantially equal to zero, is transferred to an operating state in which the transmission capability of the friction-fitting shifting element (C; B) is equal to zero, and increasing the activation force causes an immediate increase in the transmission capability of the friction-fitting shifting element (C; B).

2. Method according to Claim 1, **characterized in that** the transmission capability of the friction-fitting switching element (C; B) is reduced in the presence of the request for carrying out the coasting downshift and when undershooting a threshold value (M8_S) of the drive torque that is capable of being supported in the region of the drive machine installation (2).

3. Method according to one of Claims 1 and 2, **characterized in that** the torque (m_2) made available by the drive machine installation (2) in the opened operating state of the friction-fitting shifting element (C; B) is varied for synchronizing the form-fitting shifting element (A; F) during the coasting downshift.

4. Method according to one of Claims 1 to 3, **characterized in that** the torque available in the region of the drive machine installation (2) when identifying the closed operating state of the form-fitting shifting element (A; F) is guided in the direction of a requested value, and the activation of the vehicle brake (7) is cancelled in a defined manner.

5. Method according to one of Claims 1 to 4, **characterized in that** the braking torque of the vehicle brake (7) is set as a function of the torque (m_2) made available in the region of the drive machine installation (2), so as to represent a defined acceleration (a_fzg) of the vehicle.

6. Method according to one of Claims 1 to 5, **characterized in that** the transmission capability of the friction-fitting shifting element (C; B) in the at least almost rotationally synchronous operating state of the still open form-fitting shifting element (A; F) and prior to increasing that part of the drive torque that is capable of being supported in the region of the driving machine installation (2) is increased to a defined value, wherein the friction-fitting shifting element (C; B) is transferred to the completely opened operating state thereof at the latest upon an increase **in that** part of the drive torque that is capable of being supported in the region of the drive machine installation (2).

7. Method according to one of Claims 1 to 6, **characterized in that** at least part of the drive torque that is capable of being supported in the region of the drive machine installation (2) is recuperated in the region of the drive machine installation (2), wherein the recuperating operation of the drive machine installation (2) is terminated in the presence of the request for carrying out the coasting downshift.

8. Method according to one of Claims 1 to 7, **characterized in that** the drive machine installation (2) comprises at least one electric machine (9) and one further drive machine (8) which is preferably embodied as an internal combustion engine, wherein the electric machine (9) in the coasting operation of the vehicle, depending on requirements, for at least partially supporting the drive torque is operated in a generative manner, and at least part of the drive torque is capable of being supported in the region of the further drive machine (8).

9. Method according to Claim 8, **characterized in that** that part of the drive torque that is capable of being supported in the region of the electric machine (9) in the presence of the request for carrying out a coasting downshift is reduced to zero until the drive torque is at least partially supported only by the further drive machine (8), wherein that part of the drive torque previously supported by the electric machine (9) by activating the vehicle brake (7) is increasingly supported in the region of said vehicle brake (7).

10. Method according to Claim 8 or 9, **characterized in that** at least the recuperation torque of the electric machine (9) during the coasting downshift is made available by activation the vehicle brake (7) .

## Revendications

1. Procédé de fonctionnement d'un véhicule, équipé d'une chaîne cinématique (1) et d'un frein (7), lors d'un rétrogradage dans une transmission automatique (3) en mode de propulsion du véhicule, rétrogradage au cours duquel au moins un élément de commutation à friction (C ; B) doit être ouvert et un élément de commutation à complémentarité de formes (A ; F) doit être fermé, un couple de sortie appliqué à une sortie (4) étant au moins partiellement fourni lors d'une demande de rétrogradation de propulsion au niveau d'un dispositif moteur (2), **caractérisé en ce que** le dispositif moteur (2) est actionné avant d'effectuer le rétrogradage de propulsion pour réduire la partie du couple de sortie qui peut être fourni au niveau du dispositif moteur (2) et une partie du couple de sortie est fournie au niveau du frein de véhicule (7) par actionnement correspondant du frein de véhicule (7), et **en ce que** l'élément de commutation à friction (C ; B) est transféré, depuis l'instant (T6) où la partie du couple de sortie qui peut être fournie au niveau du dispositif moteur (2) est sensiblement nulle, dans un état de fonctionnement dans lequel la capacité de transmission de l'élément de commutation à friction (C ; B) est nulle et une augmentation de la force d'actionnement entraîne une augmentation immédiate de la capacité de transmission de l'élément de commutation à friction (C ; B).

2. Procédé selon la revendication 1, **caractérisé en ce que** la capacité de transmission de l'élément de commutation à friction (C ; B) est réduite en présence de la demande d'effectuer la rétrogradation de propulsion et lorsque le seuil (M8_S) du couple de sortie qui peut être fourni au niveau du dispositif moyeu (2) est franchi vers le bas.

3. Procédé selon l'une des revendications 1 ou 2, **caractérisé en ce que** le couple (m_2), mis à disposition par le dispositif moteur (2), est modifié dans l'état de fonctionnement ouvert de l'élément de commutation à friction (C ; B) pour synchroniser l'élément de commutation à complémentarité de formes (A ; F) pendant la rétrogradation de propulsion.

4. Procédé selon l'une des revendications 1 à 3, **caractérisé en ce que**, lors de la détection de l'état de fonctionnement fermé de l'élément de commutation à complémentarité de formes (A ; F), le couple mis à disposition par le dispositif moteur (2) est guidé en direction d'une valeur demandée et l'actionnement du frein de véhicule (7) est retiré d'une manière définie.

5. Procédé selon l'une des revendications 1 à 4, **caractérisé en ce que** le couple de freinage du frein de véhicule (7) est réglé en fonction du couple (m_2) mis à disposition par le dispositif moteur (2) afin d'obtenir une accélération définie (a_fzg) du véhicule.

6. Procédé selon l'une des revendications 1 à 5, **caractérisé en ce que** la capacité de transmission de l'élément de commutation à friction (C ; B) dans un état de fonctionnement, au moins à peu près synchrone avec la vitesse de rotation, de l'élément de commutation à complémentarité de formes (A ; F) encore ouvert et avant une augmentation de la partie, qui peut être fournie au niveau du dispositif moteur (2), du couple de sortie est élevée à une valeur définie, l'élément de commutation à friction (C ; B) étant transféré dans son état de fonctionnement entièrement ouvert au plus tard à partir de l'instant où la partie du couple de sortie, qui peut être fournie au niveau du dispositif moteur (2), augmente.

7. Procédé selon l'une des revendications 1 à 6, **caractérisé en ce qu'**au moins une partie du couple de sortie qui peut être fourni au niveau du dispositif moteur (2) est récupérée au niveau du dispositif moteur (2), l'opération de récupération du dispositif moteur (2) étant terminée en présence de la demande de rétrogradation de propulsion.

8. Procédé selon l'une des revendications 1 à 7, **caractérisé en ce que** le dispositif moteur (2) comprend au moins une machine électrique (9) et un autre moteur (8) de préférence conçu comme un moteur à combustion interne, la machine électrique (9) étant si nécessaire en mode générateur pendant le fonctionnement en propulsion du véhicule pour fournir au moins partiellement le couple de sortie et au moins une partie du couple de sortie pouvant être fournie au niveau de l'autre moteur (8).

9. Procédé selon la revendication 8, **caractérisé en ce que** la partie du couple de sortie qui peut être fournie au niveau de la machine électrique (9) est réduite à zéro en présence de la demande d'effectuer une rétrogradation de propulsion jusqu'à ce que le couple de sortie ne soit au moins partiellement fourni que par l'autre moteur (8), la partie du couple de sortie qui était précédemment fournie par la machine électrique (9) étant de plus en plus fournie au niveau du frein de véhicule (7) par actionnement de celui-ci.

10. Procédé selon la revendication 8 ou 9, **caractérisé en ce qu'**au moins le couple de récupération de la machine électrique (9) lors du rétrogradage de propulsion est rendu disponible par actionnement du frein de véhicule (7).
